# EUROPÄISCHE PATENTSCHRIFT

(11) **EP 3 057 831 B1**
(45) Veröffentlichungstag und Bekanntmachung des Hinweises auf die Patenterteilung: **14.11.2018**
(21) Anmeldenummer: 14714709.4
(22) Anmeldetag: 02.04.2014
(51) Int. Cl.: B60P 3/40, B62D 21/20, B62D 21/14, B62D 63/06, B62D 53/04, B62D 61/10

(54) **SCHWERLASTMODULFAHRZEUG**
MODULAR HEAVY GOODS VEHICLE
VÉHICULE MODULAIRE DE TRANSPORT LOURD

(30) Priorität: 18.10.2013 DE 202013104703 U
(43) Veröffentlichungstag der Anmeldung: 24.08.2016
(73) Patentinhaber: J.G.B.D. Consult SPRL, 3560 Lummen (BE)
(72) Erfinder: HABERNEGG, Hans-Jörg, 87600 Kaufbeuren (DE)
(74) Vertreter: Meinke, Jochen
(86) Internationale Anmeldenummer: PCT/EP2014/056598
(87) Internationale Veröffentlichungsnummer: WO 2015/055323

(56) Entgegenhaltungen:
- EP-A1- 0 526 368
- EP-A1- 2 457 767
- EP-A2- 1 621 450
- DE-A1- 1 555 578
- DE-A1- 2 554 047
- DE-A1-102010 014 590
- NL-A- 9 400 578

## Beschreibung

Die Erfindung betrifft ein Schwerlastmodulfahrzeug mit wenigstens einer Achse, einer Lenkung und Kupplungsmitteln.

Gattungsgemäße Modulfahrzeuge (wie DE102010014590, DE2554047, DE1555578) werden verwendet, um große, insbesondere auch schwere Lasten zu transportieren. Der modulare Aufbau des Modulfahrzeuges ermöglicht eine individuelle Anpassung an die Dimension und Schwere des zu transportierenden Gutes. Aus mehreren Fahrzeugen zusammengesetzte Schwerlastfahrzeuge sind bekannt und werden zum Transport schwererer und/oder längerer Lasten eingesetzt. Die Last liegt dabei auf den Fahrzeugmodulen selbst oder auf Ladungsträgern, wie z.B. auf Kesselbrücken, Flachbettbrücken oder Baggerbrücken oder Langmaterial-Drehschemeln.
Ebenso bekannt sind Adapter, Schwanenhälse, Zugdeichseln u. dgl., die sämtlich mit den Schwerlastmodulen koppelbar sind. Jedes Modul weist ein oder mehrere Achslinien auf, die mit einer entsprechenden Anzahl von Rädern bestückt sind, wobei sowohl Einfach- wie auch Zwillings-Bereifungen üblich sind. Weiter weist jedes Modul mindestens eine Kupplung, beispielsweise eine Kammkupplung auf, über die es mit einem weiteren Modul, insbesondere mittels eines durch die Passungen durchsteckbaren Bolzens, lösbar verbindbar ist. Eine derartige Bolzen-Laschen-Kupplung macht es möglich, stets so viele Module miteinander zu verbinden und zu kombinieren, wie für die entsprechende Transportaufgabe notwendig ist. Nach Durchführung des Transportes und Abladen der Ladung können nicht benötigte Module auf die verbleibenden Module aufgeladen und ohne eigene Beanspruchung zurück zur nächsten Ladestation oder zum Speditionshof gefahren werden. Teilweise besteht auch das Bedürfnis, während eines Transportes Achslinien einzusparen, insbesondere dann, wenn das Ladegut zwar sehr lang, aber nicht besonders schwer ist. Es ist zunehmend notwendig, Leerfahrten zu vermeiden und schnell auf unterschiedliche Ladungsgrößen reagieren zu können, z.B. während einer Hin- und Herfahrt oder einer Sternfahrt. Auch sind lange Schwerlasttransporter teilweise nur sehr schwer zu manövrieren.

Diese Aufgabe wird erfindungsgemäß dadurch gelöst, dass das Schwerlastmodul nicht nur mit wenigstens einem weiteren Schwerlastmodul und/oder weiteren Transportvorrichtungen koppelbar, sondern optional auch ausziehbar ist. Insbesondere kann es optional ein- oder mehrfach teleskopierbar ausgestaltet sein. Hierdurch wird das Schwerlastmodulfahrzeug längenvariabel und kann sich unterschiedlichen Ladungslängen anpassen, ohne dass unnötige Achslinien eingesetzt und mitgeführt werden müssen.

Die Teleskopierbarkeit wird vorteilhaft dadurch ermöglicht, dass das Schwerlastmodulfahrzeug einen zentralen Längsträger mit wenigstens einer offenen Stirnseite aufweist. Dadurch kann in dem zentralen Längsträger, der zugleich von allen im Stand der Technik bekannten störenden Einbauten wie Lenkzylindern, Druckluftbehältern u. dgl. befreit ist, wenigstens ein Auszugsträger geführt sein. In Ausgestaltung kann dieser auch mehrfach teleskopierbar sein, indem mehrere Auszugsträger ineinander ausziehbar geführt sind. Bisher scheitert eine solche Teleskopierbarkeit an mangelnden Bauraum in herkömmlichen Fahrzeugrahmen, insbesondere im Längsträger. Die Erfindung schlägt auch ein Schwerlastmodulfahrzeug vor, bei dem das Deckblech der Ladefläche, die als Schalenkonstruktion ausgeführt ist, die Funktion des Obergurts des zentralen Längsträgers übernimmt. Dieses Deckblech stellt somit den Obergurt, d.h. den Gegengurt zum Untergurt dar und führt zu einer selbsttragenden Konstruktion. Zugleich kann der zentrale Längsträger einen als Torsionsröhre dienenden kastenförmigen Untergurt aufweisen, der Verwindungen bzw. Verdrillungen des Fahrzeugrahmens, besonders bei einer muldenförmigen Bauform, entgegenwirkt.

Auch der Längsträger selbst kann kastenförmig ausgebildet sein. Eine muldenförmige Bauform kann hingegen insbesondere dadurch erreicht werden, dass das Schwerlastmodulfahrzeug einen oben offenen U-förmigen Längsträger aufweist. Dieser U-förmige Längsträger kann wiederum aus einem als Torsionsröhre dienenden kastenförmigen Untergurt mit zwei jeweils nach außen abgekanteten Stegen zur Ausbildung der Deckbleche eines selbsttragenden Aufbaus gebildet sein. Bei einer solchen Ausführungsform können die senkrechten Stege und das Deckblech bei Bedarf als Kantkonstruktion ausgeführt sein, wobei dann das Deckblech, das den Obergurt bildet, die gleiche Dicke bzw. Stärke aufweist wie die Stege. Dies ermöglicht eine weitere Material- und Gewichtseinsparung. Das Schwerlastfahrzeug weist bei gleicher Nutzlast ein geringeres Eigengewicht auf. Damit können insbesondere lange Transporte auf öffentlichen Straßen rationeller durchgeführt werden. Das ist z.B. bei Pipelineelementen, Off-Shore-Bauwerken, Bohrinseln, Windkraftanlagen, Plattformen, Pipelines, aber auch bei Bauelementen wie Stahl- und Betonelementen, Kransystemen wie Kränen, Krangewichten, Krankomponenten der Fall. Dasselbe gilt für Sperrgüter, Langmaterial und Brückenelemente. Die Module können mit allen anderen verfügbaren Zusatzbauteilen und Zubehören wie Tiefbettadaptern, Schwanenhälsen und Zugdeichseln gekoppelt werden. Damit können bedarfsgerecht sämtliche Arten von Spezialaufliegern gebildet werden. Durch die Abkantung der Stege kann auf eine nötige bzw. ungünstige Wärmeinleitung in die Konstruktion durch das Anschweißen von Deckblechen bzw. Ladeflächenelementen verzichtet werden.

Durch den Verzicht auf den herkömmlichen Obergurt lässt sich zugleich eine Längsmulde bereitstellen, in die beispielsweise Baggerausleger und -stiele oder andere, andernfalls hochaufragende und Brückendurchfahrten u. dgl. behindernde oder verhindernde Bauteile abgelegt bzw. abgesenkt werden können.

Die Mulde kann ihrerseits wieder wenigstens einseitig eine offene Stirnseite aufweisen, in der ein ggf. auch mehrfach ausziehbarer Auszugsträger angeordnet sein kann, um die erforderliche Verlängerung des Schwerlastmodulfahrzeuges bei gleichzeitigem Verzicht auf nicht benötigte Achslinien bereitzustellen. Der selbsttragende Aufbau nimmt ähnlich wie bei einer bekannten selbsttragenden Karosserie die entstehenden Zug-, Druck- und Querkräfte auf und verhindert eine unerwünschte bzw. unzulässige Torsion. Damit kann auf einen üblichen Rahmen oder ein herkömmliches Fahrgestell, also insbesondere auf einen Leiter- oder Rohrrahmen verzichtet werden. Stattdessen übernimmt die Gesamtstruktur die tragende Funktion. Es gibt keine Trennung zwischen rein auf Biegung/Torsion oder Schub belasteten Bauteilen und weiteren Bauteilen, die der Ladungsaufnahme dienen (wie z.B. Leiter- oder Gitterrahmen). Alle Teile wirken statisch als Gerippe oder Schalen und nehmen in ihrer Gesamtheit die eingeleiteten Kräfte auf.

Durch eine solche selbsttragende Konstruktion ergibt sich eine erheblich leichtere und preiswertere Bauweise in Abkehr von dem bei Lastkraftfahrzeugen bis heute üblichen nicht selbsttragenden Rahmen- bzw. Chassis-Aufbau. Durch geeignete Maßnahmen wird die erforderliche Steifigkeit erzielt. Dadurch werden elastische Verformungen gering gehalten und unerwünschte Knarrgeräusche im Fahrbetrieb vermieden.

Diese hohe Steifigkeit hat zugleich auf das Fahrverhalten gerade auf schlechten Straßen oder in extremen Situationen positive Auswirkungen. Das gilt insbesondere, aber nicht nur, für Transporte auf öffentlichen Straßen, auf denen auch höhere Geschwindigkeiten gefahren werden, wie insbesondere auch Langmaterialtransporte, ebenso wie für innerbetriebliche und Off-Road-Transporte mit teilweise sehr hoher Nutzlast. Jedes Schwerlastmodulfahrzeug kann nach dem Gesamtkonzept der Erfindung auf einem zentralen Auszugsträger verschoben und arretiert werden. Die Module lassen sich quasi auffädeln bzw. nach Bedarf aufreihen, gleichgültig ob es sich um ein- oder mehrachsige Module handelt. Vorgesehen sind bis zu sechsachsige Module. Schwerlastmodulfahrzeuge mit oben offenem U-förmigen Ladungsträger können unabhängig von anderen bereits aufgefädelten Modulen von unten auf den zentralen Auszugsträger aufgesetzt und von diesem auch wieder abgenommen werden. Dies geschieht, indem der Träger über hierzu geeignete, beispielsweise pneumatische, hydraulische oder elektrische Hubvorrichtungen angehoben wird, so dass das nicht benötigte Modul seitlich, beispielsweise mit Hilfe eines Gabelstaplers od. dgl., herausgezogen werden kann. In umgekehrter Reihenfolge können auch zusätzliche Module eingefügt werden. Diese werden dann an die benötigte Stelle geschoben und können dort, beispielsweise mittels hydraulisch betätigter Bolzen und sonstiger Verriegelungswerke, arretiert werden.

Die Schwerlastmodulfahrzeuge weisen erfindungsgemäß wenigstens einseitig einen Kupplungskopf oder ein anderes geeignetes Kupplungsmittel auf. Diese sind erfindungsgemäß unterhalb oder außerhalb der offenen Stirnseite des Längsträgers angeordnet. Dies ist erforderlich, um den Auszugsträger aus den Längsträgern ausziehen und in diese einstecken zu können. Bei herkömmlichen Schwerlastmodulfahrzeugen waren die Kupplungsmittel, insbesondere Kupplungsköpfe die insbesondere als Bolzen-Laschen-Kupplung ausgebildet sein können, an der geschlossenen Stirnseite der Längsträger angeschweißt. Bei diesem Stand der Technik war grundsätzlich keine Ausziehbarkeit der einzelnen Module gegeben.

Dies ändert die vorliegende Erfindung grundsätzlich, indem es die Schwerlast-Fahrzeugrahmen nicht nur mittels der Kupplungsköpfe und -mittel kombinierbar, sondern auch ausziehbar macht. Der Kupplungskopf kann insbesondere als Bolzen-Laschen-Kupplung ausgebildet sein, die eine sehr stabile Verbindungsart, z.B. als Kammkupplung bereitstellt. Die Bolzen-Laschen-Kupplung kann im Zusammenwirken zusätzlichen Druckstücken und/oder Zugankern sowohl öffnende als auch schließende Biegemomente übertragen. Wird eine Transportlast mittig zwischen zwei mittels des Kupplungsmittels miteinander verbundenen Module aufgebracht, werden sehr hohe Biegekräfte auf diesen Verbund ausgeübt mit der Folge, dass sich der Verbund im Bereich der Kupplung durchbiegt und die beiden entgegengesetzten freien Enden der Module hochbiegen. Dies wird mit Hilfe der Druckstücke verhindert. Umgekehrt würde eine punktuelle Gewichtsbelastung der Module an ihren freien Enden zu einem Aufbiegen des Verbindungsbereiches zwischen beiden Modulen führen. Dies wird durch entsprechende Zuganker verhindert.

Durch das Öffnen der Stirnseite besteht die Gefahr, dass die stirnseitig offenen Längsträger nicht mehr so stabil und verbindungssteif sind wie zuvor. Dem wird durch Einsatz wenigstens eines Ringankers entgegengewirkt. Bei oben offenen U-förmigen Längsträgern ist wenigstens eine entsprechende Klammer oder ein U-förmiger Anker vorgesehen. Sowohl der U-förmige oder der Ringanker wie auch die Klammer können mit dem Kupplungskopf bzw. mit dem Kupplungsmittel kombiniert sein, um Gewicht und Bauraum zu sparen.

In weiterer Ausgestaltung ist vorgesehen, dass das Schwerlastmodulfahrzeug einen vorderen und hinteren Überhang aufweist, wobei der Abstand zwischen der Mitte des Kupplungskopfes oder Kupplungsmittel bis zur nächsten Achse der Hälfte des Radstandes entspricht. Dies hat zur Folge, dass die die Lenkung zweier benachbarter Schwerlastmodulfahrzeuge verbindenden Spurstangen dieselbe Länge aufweisen, wie die innerhalb eines Schwerlastmodulfahrzeuges. Innerhalb der einzelnen Fahrzeugmodule sind zur gleichmäßigen Lenkung der einzelnen Fahrzeugachsen bereits umsteckbare Spurstangen vorhanden. Die Erfindung erweitert dies um die Kombinierbarkeit der Fahrwerke und insbesondere deren Lenkungen. Werden zwei Module miteinander verbunden, so ist der Radstand auch zwischen deren Fahrwerken identisch mit dem innerhalb eines Einzelfahrwerkes bzw. Modules.

Die Lenkung ist voll einstellbar. Beispielsweise können die am Anfang und am Ende eines Schwerlastmodulfahrzeugverbundes befindlichen Achsen in einem sehr viel größeren Winkel, beispielsweise von 60°, eingeschlagen werden, während der Winkel zur Mitte des Verbundes hin immer mehr abnimmt, bis die genau in der Mitte befindliche Achse überhaupt keinen Lenkeinschlag mehr aufweist. Die Lenkwinkel vergrößern sich von der Mitte nach außen in gegenläufiger Richtung. Der Verbund kann damit in einem sehr engen Wendekreis bewegt werden bei gleichzeitig minimiertem Reifenverschleiß. Für sehr breite Lasten können wenigstens zwei Schwerlastmodulfahrzeuge auch in Querrichtung mittels geeigneter Konsolen miteinander verbunden werden. Hierzu werden ausreichend breite Abstandsstücke eingesetzt, um die bei entsprechendem Lenkeinschlag nach außen überstehenden Reifen und Felgen nicht zu behindern bzw. zu beschädigen.

Das jeweilige Schwerlastmodulfahrzeug kann optional ganz oder teilweise Einbauteile für eine vollkombinierbare Lenkung enthalten. Solche Einbauteile sind neben den bereits erwähnten Spurstangen und die Lenkaktuatoren beispielsweise sogenannte Nehmerzylinder, die die von einem korrespondierenden Geberzylinder übertragenen hydraulischen Steuerdrücke in entsprechende Lenkbewegungen übertragen. Optional können solche Einbauteile nur für die ganz vorne oder ganz hinten in einem Modulverband eingebauten Module vorgesehen sein, da die übrigen mittig gelegen Module über die Spurstangen mitgesteuert werden, so dass wiederum Gewicht und Kosten gespart werden können. In diesem Fall muss zum Zusammenbau der Modulverbände darauf geachtet werden, dass jeweils ein eine vollkombinierbare Lenkung enthaltendes Modul am Anfang und Ende auf den Längsträger aufgefädelt werden.

Die Erfindung sieht schließlich auch ein Verbindungsmittel zu einer hierzu korrespondierenden Aufnahme eines Schwanenhalses für die Verbindung des gesamten Schwerlastmodules mit einer Sattelzugmaschine od. dgl. auf. Hierzu geeignet ist als Kupplungsmittel insbesondere wieder eine Bolzen-Laschen-Kupplung, da hieran die vorhandene Bolzen-Laschen-Kupplung des vorderen Moduls ankuppelbar ist. Auch das vordere Ende des Auszugsträgers kann mit einem solchen Kupplungskopf zu versehen sein, um diesen direkt mit dem Schwanenhals zu verbinden. Alternativ kann auch eine Zugstange oder Deichsel so ausgebildet werden, dass diese mit einem Schwerlastmodulfahrzeug verbindbar ist.

Schließlich können auch unterschiedlich bereifte Schwerlastmodulfahrzeuge miteinander kombinierbar sein, etwa wenn diese verschiedene Reifengrößen wie 17,5 Zoll oder 19,5 Zoll aufweisen. In diesem Fall müssen die Kupplungsmittel höhenmäßig so angeordnet sein, dass sie in der Verbindungsstellung miteinander fluchten. Die Fahrzeuglängsträger müssen höhenmäßig so positioniert sein, dass beide mit einem einsteck- bzw. -schiebbaren Auszugsträger miteinander verbunden werden können. Dies führt zu einer maximal möglichen Kombinationsvielfalt der verschiedenen Module und Fahrzeugkomponenten. Zwischen die einzelnen Schwerlastmodule können dann weiter mittels der bekannten bzw. erfindungsgemäßen Kupplungselemente Transportgestelle wie Ladebrücken, Tiefbetten, Baggerbrücken, Flachbettbrücken oder Kesselbrücken eingebaut werden. Es können auch noch unterschiedlich breite und/oder hohe Schwerlastmodulfahrzeuge miteinander kombiniert werden. Weitere Ausgestaltungen sind etwa wie folgt möglich:
- Schwerlastmodulfahrzeug, welches aus wenigstens zwei Modulen über Kupplungsmittel zusammengesetzt ist, wobei jedes Modul wenigstens eine lenkbare Achse aufweist, dadurch gekennzeichnet, dass zwischen den Rädern in Fahrzeuglängsrichtung eine an wenigstens einer Seite offene Aufnahme für einen Längsträger vorgesehen ist, und dass jedes Modul wenigstens stirnseitig mit Kupplungsmitteln zum Fixieren eines Nachbarmodules oder anderer Fahrzeugelemente, wie einem Schwanenhals, eine Brücke od. dgl. versehen ist;
- Schwerlastmodulfahrzeug, dadurch gekennzeichnet, dass die Aufnahme für den Längsträger kastenförmig oder querschnittlich U-förmig ausgebildet ist, wobei die Aufnahme einen Teil des Fahrzeugrahmens bildet;
- Schwerlastmodulfahrzeug, dadurch gekennzeichnet, dass die Aufnahmen einen als Torsionsröhre ausgebildeten Untergurt aufweist;
- Schwerlastmodulfahrzeug, dadurch gekennzeichnet, dass die Aufnahmen als Obergurt eine als Schalenkonstruktion ausgebildete Ladefläche aufweisen;
- Schwerlastmodulfahrzeug, dadurch gekennzeichnet, dass die Module an dem Längsträger an unterschiedlichen Positionen fixierbar sind;
- Schwerlastmodulfahrzeug, dadurch gekennzeichnet, dass der Längsträger selbst teleskopierbar ausgebildet ist;
- Schwerlastmodulfahrzeug, dadurch gekennzeichnet, dass die Kupplungsmittel als Bolzen-/Laschenkupplungen ausgebildet sind;
- Schwerlastmodulfahrzeug, dadurch gekennzeichnet, dass die Module nebeneinander und/oder hintereinander koppelbar ausgebildet sind;
- Schwerlastmodulfahrzeug, dadurch gekennzeichnet, dass im Längsträger ein Auszugsträger positioniert ist, wobei die Module mit U-förmigen Aufnahmen von unten an dem Längs- bzw. dem Auszugsträger positionierbar sind;
- Schwerlastmodulfahrzeug, dadurch gekennzeichnet, dass die stirnseitig offene Aufnahme und/oder der Längsträger einen U-förmigen oder im Wesentlichen rechteckigen, stirnseitigen verstärkten Bereich aufweist;
- Schwerlastmodulfahrzeug, dadurch gekennzeichnet, dass ein vorderer und hinterer Überhang des Fahrzeugrahmens vorgesehen ist, wobei der Abstand zwischen der Kupplungsebene zweier benachbarter Modulfahrzeuge zur nächsten Achse der Hälfte des Radstandes entspricht;
- Schwerlastmodulfahrzeug, dadurch gekennzeichnet, dass die Lenkgestänge benachbarter Modulfahrzeuge miteinander kuppelbar sind;
- Schwerlastmodulfahrzeug dadurch gekennzeichnet, dass dieses einen Kupplungskopf, insbesondere eine Bolzen-Laschen-Kupplung aufweist, der mit einem Kupplungskopf, insbesondere einer Bolzen-Laschen-Kupplung eines unterschiedlich breiten, unterschiedlich bereiften und/oder unterschiedlich hohen Moduls ohne Zusatzadapter verbindbar ist;
- Schwerlastmodulfahrzeug, dadurch gekennzeichnet, dass Druckstücke, Systembleche und/oder Bohrungen denselben an den zu kombinierenden Schwerlastmodulfahrzeugen zumindest teilweise gegenüber stehen und die bei gleich breiten, gleich bereiften und/oder gleich hohen Modulen üblichen Zuganker, Zentrier- und Kupplungsbolzen verwendbar sind.

Die Erfindung ist nachstehend anhand der Zeichnung beispielhaft näher erläutert. Diese zeigen in
- Fig. 1: eine perspektivische Ansicht eines vierachsigen Schwerlastmodulfahrzeuges mit Einfachbereifung,
- Fig. 2: eine perspektivische Ansicht eines Schwerlastmodulfahrzeuges gemäß Fig. 1 mit teilweise ausgezogenem Auszugsträger,
- Fig. 3: eine perspektivische Ansicht eines vierachsigen Schwerlastmodulfahrzeuges gemäß Fig. 1 und eines zweiachsigen Schwerlastmodulfahrzeuges, verbunden mittels eines Auszugsträgers,
- Fig. 4: eine perspektivische Ansicht eines miteinander gekoppelten zwei- und vierachsigen Schwerlastmodulfahrzeuges mit U-förmigen Längsträgern,
- Fig. 5: eine Seitenansicht des Koppelverbundes gemäß Fig. 4,
- Fig. 6: eine perspektivische Ansicht eines vierachsigen Schwerlastmodulfahrzeuges mit U-förmigem Längsträger,
- Fig. 7: einen Querschnitt durch einem U-förmigen Längsträger mit kastenförmigem Untergurt,
- Fig. 8: eine perspektivische Teilansicht eines Schwerlastmodulfahrzeuges mit teilweise ausgezogenem Auszugsträger,
- Fig. 9: eine Seitenansicht einer Kupplungsstelle,
- Fig. 10: eine Seitenansicht einer Kupplungsstelle und der Überhänge,
- Fig. 11: eine schematische Aufsicht auf einen Kopplungsverbund zweier Schwerlastmodulfahrzeuge mit mittels Spurstangen verbundener Lenkungsmittel und unterschiedlich eingeschlagenen Zwillingsreifen,
- Fig. 12: eine perspektivische Ansicht eines Kopplungsverbundes mit einem hiermit in Querrichtung verbundenen Kopplungsverbund,
- Fig. 13: einen Querschnitt durch einen U-förmigen Rahmen gemäß Fig. 7 mit Versorgungsleitungen,
- Fig. 14: eine Seitenansicht eines dreiachsigen Schwerlastmodulfahrzeuges mit angekoppeltem Schwanenhals,
- Fig. 15: eine Seitenansicht eines sechsachsigen Schwerlastmodulfahrzeuges mit angekoppelter Zugstange,
- Fig. 16: eine Seitenansicht eines sechsachsigen Schwerlastmodulfahrzeuges und
- Fig. 17: eines mittels teilweise ausgezogenem Auszugsträger verbundenen Schwanenhalses, eine Seitenansicht eines mittels eines ausgezogenen Auszugsträgers verbundenen fünfachsigen und dreiachsigen Schwerlastmodulfahrzeuges gekoppelt an einen Schwanenhals,
- Fig. 18: einen Verbund gemäß Fig. 23, ergänzt um ein zweiachsiges Schwerlastmodulfahrzeug in der Mitte des Auszugsträgers,
- Fig. 19: eine Seitenansicht zweier unterschiedlich bereifter Schwerlastmodulverbünde mit einem daran angekoppelten Schwanenhals,

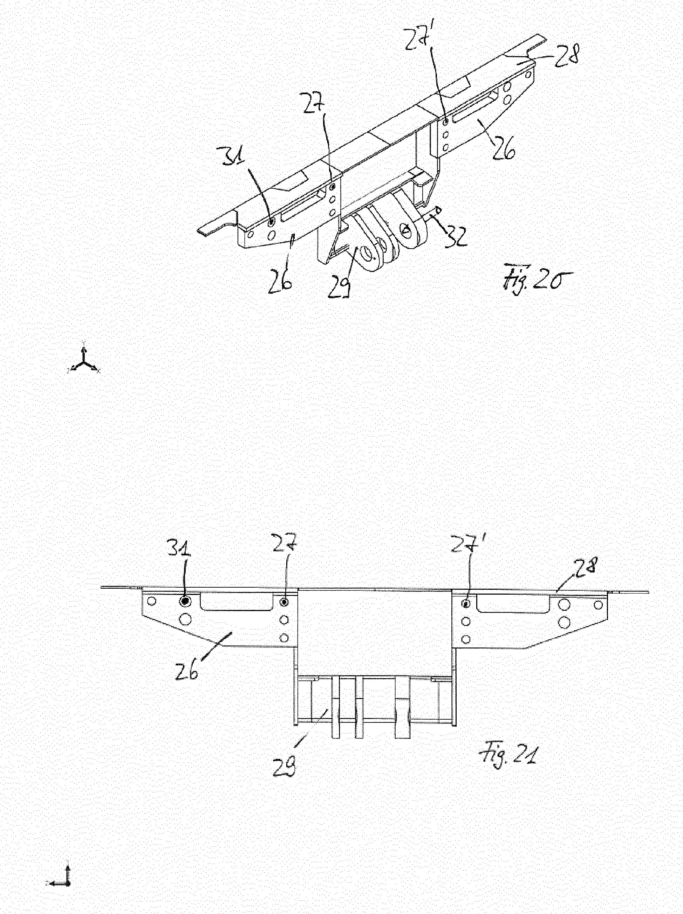

- Fig. 20: eine perspektivische Ansicht einer Bolzen-Laschen-Kupplung für unterschiedlich breite, unterschiedlich hohe und/oder unterschiedlich bereifte Schwerlastmodule sowie in
- Fig. 21: eine Frontansicht einer Bolzen-Laschen-Kupplung gem. Fig. 20.

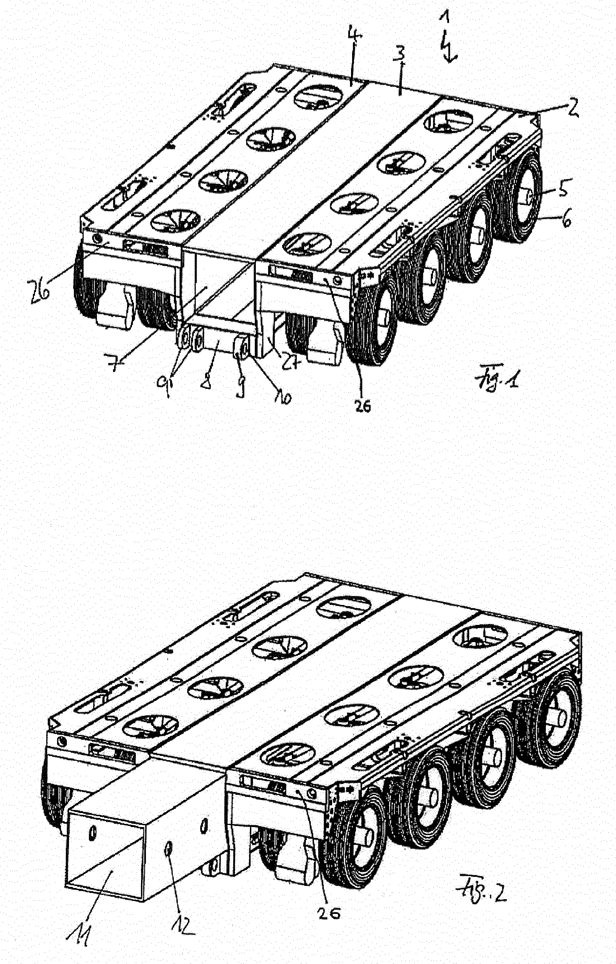

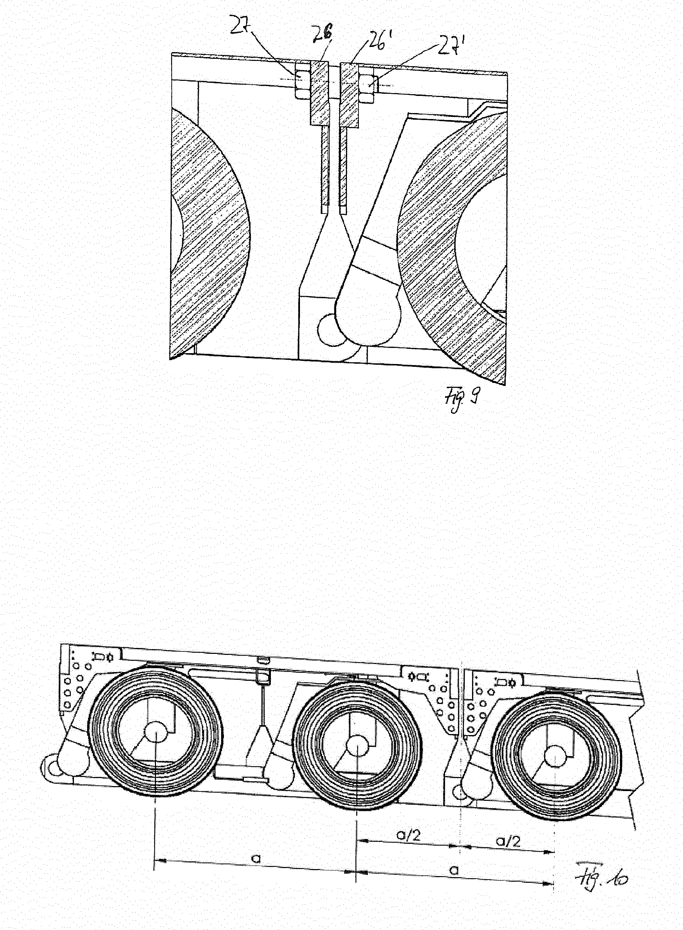

Ein allgemein mit 1 bezeichnetes Schwerlastmodulfahrzeug weist einen Rahmen 2 mit einem zentralen, beispielsweise kastenförmigen Längsträger 3 und einer Ladefläche 4 auf. An Achsen 5 sind Laufräder 6 befestigt, wobei Fig. 1 ein vierachsiges Modul mit Zwillingsbereifung zeigt. Der Längsträger 3 weist eine offene Stirnwand (Stirnseite) 7 auf. An seinem kastenförmigen Untergurt 8 sind Kupplungsmittel 9, 9' angeordnet. Beispielsweise sind diese als Laschen mit Durchstecköffnungen 10 ausgebildet, in die ein nicht näher dargestellter Bolzen zur Verbindung mit einem korrespondierenden Kupplungsmittel eines weiteren Schwerlastmodulfahrzeuges einsteck- und verriegelbar ist. An dem Fahrzeugrahmen 2 sind weiter Abstands- bzw. Druckstücke 26 angeordnet. Diese wirken mit hierzu korrespondierenden nicht näher beschriebenen Druckstücken 26' eines weiteren benachbarten Moduls (Fig. 9) zusammen, um auftretende Biegemomente aufzufangen. Dasselbe gilt für die Ring- bzw. Zuganker 27, 27'. Aus dem zentralen Längsträger 3 ist optional ein Auszugsträger 11, wie beispielhaft aus der Fig. 2 hervorgeht, ausziehbar. Dieser kann Arretierbohrungen 12 aufweisen, in die nicht näher dargestellte Arretierbolzen, die beispielsweise hydraulisch, pneumatisch oder mechanisch betätigbar sind, eingreifen, um den Auszugsträger 11 in der gewünschten Auszugslänge zu fixieren.

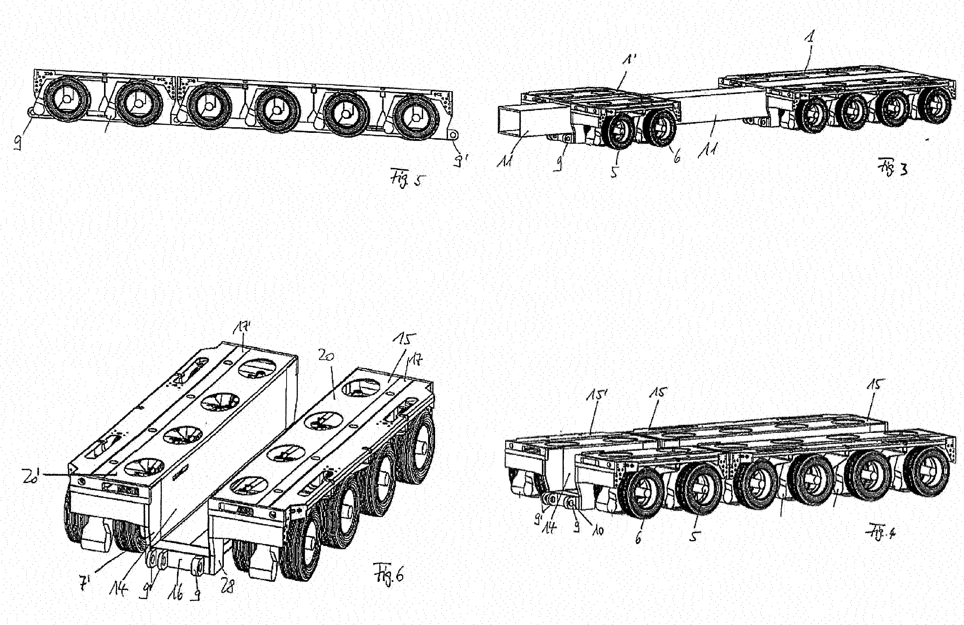

Der Auszugsträger 11 kann wiederum in einen zentralen Längsträger 3 mit offener Stirnseite 7 eines weiteren Schwerlastmodulfahrzeuges 1' eingreifen und, wie in Fig. 3 dargestellt, ganz durch diesen hindurchgeführt sein und an der gegenüberliegenden freien Seite austreten. Er wird dann in diesem zweiten Modul 1' wieder mit entsprechenden Bolzen in der gewünschten Stellung fixiert. Der Auszugsträger 11 kann aber, ohne dass dies in der Zeichnung näher dargestellt wäre, auch nur insoweit in den zentralen Längsträger 3 eines weiteren Modules eingreifen, dass er an der gegenüberliegenden Seite nicht wieder aus diesem austritt.

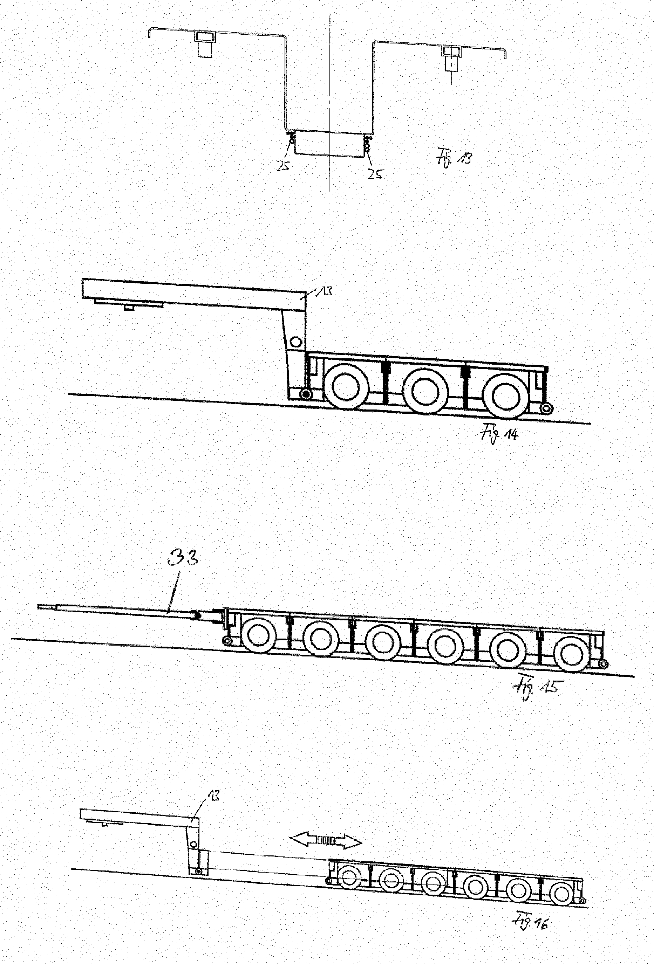

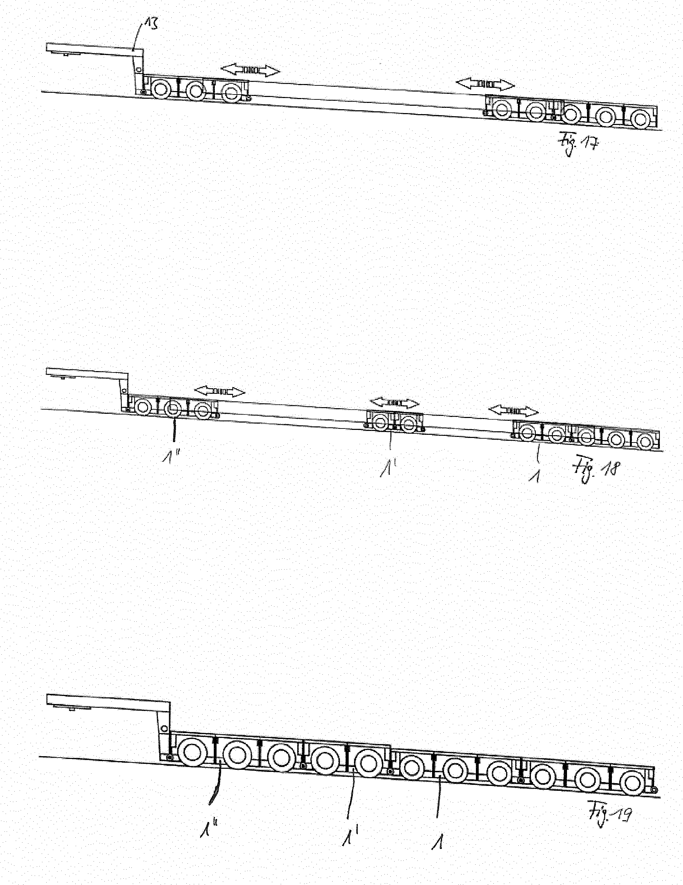

Wie beispielsweise aus Fig. 18 hervorgeht, kann auf dem Auszugsträger 11 eine Mehrzahl von Modulen 1, 1', 1" aufgefädelt sein, etwa in der Weise, dass sich sowohl am Anfang wie am Ende des Auszugsträgers 11 jeweils Module 1, 1" befinden, während sich in der Mitte ein weiteres, nach vorne oder hinten bewegliches und in der gewünschten Position fixierbares Modul 1' befindet, durch das dann der Auszugsträger 11 hindurchtritt. In einer solchen Ausgestaltung wird das in Fahrtrichtung gesehen erste Modul 1" unmittelbar mit einem Schwanenhals 13, wie etwa aus der Fig. 14 hervorgeht, oder beispielsweise mit einer Zugstange oder Deichsel 33, vergleiche Fig. 15, verbunden. Alternativ ist es möglich, den Auszugsträger 11 selbst mit Kupplungsmitteln 9, insbesondere einem Kupplungskopf 9 zu versehen, der mit einem Schwanenhals 13 koppelbar ist. Die einzelnen Module 1, 1', 1" können optional beidseitig mit Kupplungsmitteln 9, 9' ausgestattet sein. Zur Material- und Kosteneinsparung kann darauf insbesondere am Ende eines Modules, das den Abschluss des Schwerlastmodulfahrzeugverbandes bildet, verzichtet werden, wie aus Fig. 18 hervorgeht. In Fig. 10 ist dargestellt, dass der Überhang des jeweiligen Modulfahrzeugs der Hälfte des Achsabstandes entspricht.

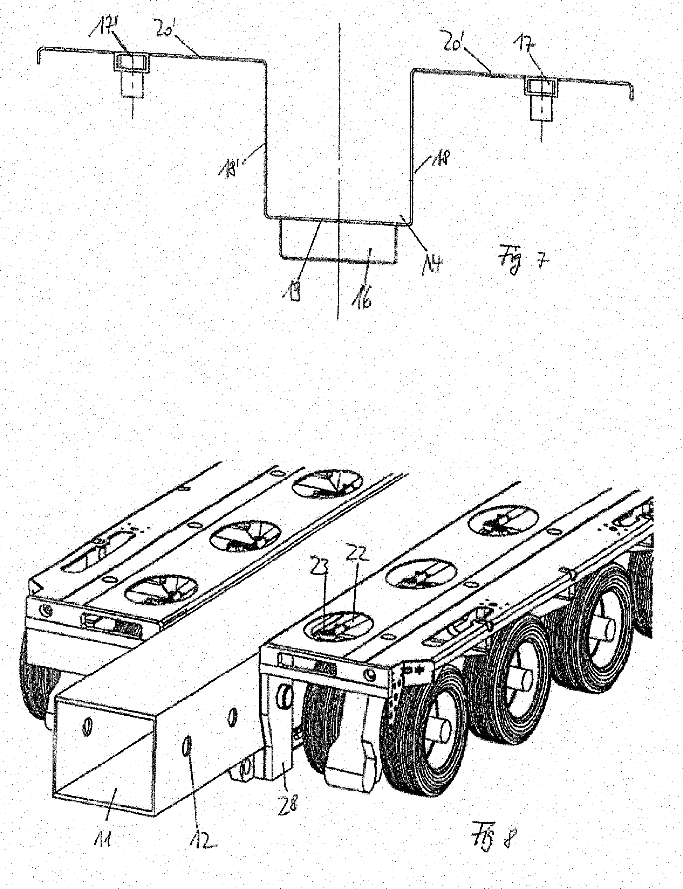

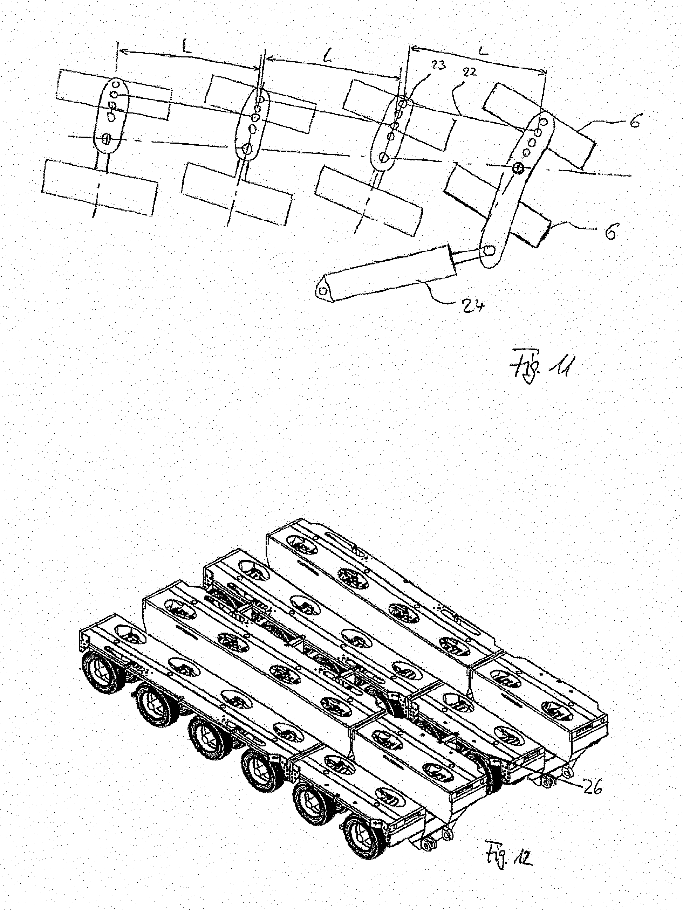

Statt eines geschlossenen, kastenförmigen Längsträgers 3, wie beispielsweise in den Fig. 1 bis 3 gezeigt, kann auch ein U-förmiger, zentraler Längsträger (Mulde) 14 in den einzelnen Modulen 15, 15', 15" vorgesehen sein, wie beispielsweise aus den Fig. 4 und 6 bis 8 hervorgeht. Diese weisen ebenfalls einen kastenförmigen Untergurt 16 mit daran unterhalb angeordneten Verbindungsmitteln 9, 9' auf. An den Untergurt 16 sind jeweils zur Außenseite des Moduls 15 bis 15" abgekantete Stege 18, 18' angeformt, wobei es sich auch um ein durchgehendes, mehrfach abgekantetes, einheitliches Blech handeln kann, das sowohl die Stege 18, 18' wie auch die Basis 19 des U-förmigen Trägers 14 bildet. In der aus den abgekanteten Bereichen 20, 20' gebildeten Ladefläche, die auch mit Versteifungen 17, 17' versehen sein kann, können Ausnehmungen 21, 21' vorgesehen sein, um den Zugang zu den Lenkungen, insbesondere den Spurstangen 22 mit Spurstangenköpfen 23 zu ermöglichen, wie in Fig. 8 dargestellt. Wie aus Fig. 11 hervorgeht, weisen nur einzelne, insbesondere am Modulende eingesetzte Achsen und Lenkungen einen Nehmerzylinder 24, 24' auf, mit dem entsprechende Steuerdrücke aus einem nicht näher dargestellten Geberzylinder eines Zugfahrzeuges in die gewünschten Lenkbewegungen umgesetzt werden. Die übrigen, nicht aktiv über Nehmerzylinder angesteuerten Lenkungen und Lenkachsen werden über die Spurstangen 22, die je nach Fahrzeuglänge und -konfiguration umgesteckt werden können, so gelenkt, dass sie nicht in einem maximal möglichen Winkel von beispielsweise 60°, sondern abgestuft in einem geringer werdenden Winkel zur Mitte des Modulverbundes hin eingeschlagen werden. Mit dieser Zwangslenkung auch der hinteren Achsen im Modulverbund werden die notwendigen Kurvenfahrten und Schleppkurven ermöglicht.

Der unterhalb des kastenförmigen Fahrzeuglängsträgers 3 oder des U-förmigen Längsträgers 14 angeordnete Untergurt 8 beziehungsweise 16, der als Torsionsröhre dient, ist unterseitig schmaler ausgeführt als oberseitig, um eine einfache Verlegung von Versorgungsleitungen 25 zu ermöglichen, vergleiche Fig. 13. Die einzelnen Schwerlastmodulfahrzeuge 1, 1', 1" und 15, 15', 15" können nicht nur in Längsrichtung, sondern auch in Querrichtung miteinander verbunden werden, und zwar über Kupplungselemente, beispielsweise Abstands- oder Druckstücke 26, vergleiche Fig. 12. Die Bereitstellung eines Abstandes zwischen benachbarten Schwerlastmodulen 1, 1', 1" beziehungsweise 15, 15', 15" ist notwendig, da Lenkungsteile und Reifenteile bei Kurvenfahrten über die Außenkonturen der Module, insbesondere deren Ladeflächen herausragen, vergleiche Fig. 11.

Natürlich ist die Erfindung nicht auf die dargestellten Ausführungsbeispiele beschränkt. Weitere Ausgestaltungen sind möglich, ohne den Grundgedanken zu verlassen. Wesentlich ist die freie Kombinierbarkeit sämtlicher Schwerlastmodulfahrzeuge in jeglicher Hinsicht, um einen optional handhabbaren Modulbaukasten zu erzeugen, der zu immer neuen Konfigurationen zusammengesetzt werden kann, ohne für jeden Einsatzfall ein eigenes Spezialfahrzeug bauen oder anschaffen zu müssen. Hierzu ist insbesondere auch vorgesehen, dass das Schwerlastmodulfahrzeug 1 einen Kupplungskopf, insbesondere eine Bolzen-Laschen-Kupplung 9, 9', aufweist, der mit einem Kupplungskopf, insbesondere einer Bolzen-Laschen-Kupplung eines unterschiedlich bereiften, unterschiedlich breiten und/oder unterschiedlich hohen Moduls ohne Zusatzadapter verbindbar ist. Eine solche Standardschnittstelle bzw. ein solcher Standardkupplungskopf weist Druckstücke 26, Anker und/oder Bohrungen 29, 30 auf, die entsprechenden Drückstücken, Systemblechen und/oder Bohrungen an den zu kombinierenden Schwerlastmodulfahrzeugen zumindest teilweise gegenüberstehen. Es sind dieselben Zuganker 27, 27', Zentrierbolzen 31 und Kupplungsbolzen 32 verwendbar wie bei gleich breiten, gleich bereiften und/oder gleich hohen Modulen.

### Bezugszeichenliste:

1,1',1",15,15',15" Schwerlastmodulfahrzeug
2 Rahmen
3 Längsträger
4 Ladefläche
5 Achsen
6 Laufrädern
7 Stirnseite/Stirnseite
8 Untergurt
9,9' Kupplungskopf/ Kupplungsmittel/Bolzen-Laschen-Kupplung
10 Durchstecköffnungen
11 Auszugsträger
12 Arretierbohrungen
13 Schwanenhals
14 Längsträger/Mulde
16 Untergurt
17,17' Versteifungen
18,18' Stege
19 Basis
20,20' abgekantete Bereiche
21,21' Ausnehmungen
22 Spurstangen
23 Spurstangenköpfen
24, 24' Nehmerzylinder
25 Versorgungsleitungen
26,26' Druckstücke bzw. Abstandsstücke
27,27' Ringanker bzw. Zuganker
28 Anker
29,30 Bohrungen
31 Zentrierbolzen
32 Kupplungsbolzen
33 Deichsel

## Patentansprüche

1. Schwerlastmodulfahrzeug mit wenigstens einer Achse, einer Lenkung und Kupplungsmitteln, wobei dieses mit wenigstens einem weiteren Schwerlastmodulfahrzeug (1, 1', 1", 15, 15', 15") und/oder weiteren Transportvorrichtungen koppelbar und optional ausziehbar ist,
**dadurch gekennzeichnet,**
**dass** das Schwerlastmodulfahrzeug (1, 1', 1", 15, 15', 15") einen zentralen Längsträger (3, 14) mit wenigstens einer offenen Stirnseite (7) aufweist und wobei als Obergurt des zentralen Längsträgers (3, 14) eine als Schalenkonstruktion ausgebildete Ladefläche ausgebildet ist.

2. Schwerlastmodulfahrzeug nach Anspruch 1,
**dadurch gekennzeichnet,**
**dass** das Schwerlastmodulfahrzeug (1, 1', 1", 15, 15', 15") wenigstens einmal teleskopierbar ist und
**dass** das Schwerlastmodulfahrzeug (1, 1', 1", 15, 15', 15") in mehreren Schritten teleskopierbar ist.

3. Schwerlastmodulfahrzeug nach Anspruch 1 oder 2,
**dadurch gekennzeichnet,**
**dass** in dem stirnseitig offenen Längsträger (3, 14) ein Auszugsträger (11) geführt ist.

4. Schwerlastmodulfahrzeug nach Anspruch 1 und/oder wenigstens einem der vorherigen Ansprüche,
**dadurch gekennzeichnet,**
**dass** der zentrale Längsträger (3, 14) einen als Torsionsröhre dienenden kastenförmigen Untergurt (8) aufweist.

5. Schwerlastmodulfahrzeug nach einem der Ansprüche 1 bis 4,
**dadurch gekennzeichnet,**
**dass** das Schwerlastmodulfahrzeug (1, 1', 1") einen kastenförmigen Längsträger (3) aufweist.

6. Schwerlastmodulfahrzeug nach einem oder mehreren der Ansprüche 1 bis 5,
**dadurch gekennzeichnet,**
**dass** das Schwerlastmodulfahrzeug (15, 15', 15") einen oben offenen U-förmigen Längsträger in Form einer Längsmulde (14) aufweist.

7. Schwerlastmodulfahrzeug nach Anspruch 6,
**dadurch gekennzeichnet,**
**dass** in der Mulde (14) ein ausziehbarer Auszugsträger (11) angeordnet ist.

8. Schwerlastmodulfahrzeug nach einem oder mehreren der Ansprüche 1 bis 7, **dadurch gekennzeichnet,**
**dass** jedes Schwerlastmodulfahrzeug (1, 1', 1", 15, 15', 15") auf einem zentralen Auszugsträger (11) verschoben und arretiert werden kann.

9. Schwerlastmodulfahrzeug nach Anspruch 6 bis 8,
**dadurch gekennzeichnet,**
**dass** jedes Schwerlastmodulfahrzeug (15, 15', 15") mit oben offenem U-förmigen Längsträger (14) von unten auf den Auszugsträger (11) aufgesetzt und von diesem abgenommen werden kann.

10. Schwerlastmodulfahrzeug nach Anspruch 1 und/oder wenigstens einem der vorherigen Ansprüche,
**dadurch gekennzeichnet,**
**dass** dieses wenigstens einseitig einen Kupplungskopf, insbesondere eine Bolzen-Laschen-Kupplung (9, 9'), oder ein anderes geeignetes Kupplungsmittel (9, 9') aufweist, welches unterhalb oder außerhalb der offenen Stirnseite (7, 7') des Längsträgers (3, 14) angeordnet ist.

11. Schwerlastmodulfahrzeug nach Anspruch 10,
**dadurch gekennzeichnet,**
**dass** der Längsträger (3, 14) zusätzlich zur Bolzen-Laschen-Kupplung (9, 9') Druckstücke (26, 26') und/oder Zuganker aufweist.

12. Schwerlastmodulfahrzeug nach Anspruch 1 und/oder 11,
**dadurch gekennzeichnet,**
**dass** der stirnseitig offene Längsträger (3, 14) wenigstens einen mit einem Kupplungskopf oder Kupplungsmittel (9, 9') kombinierten U-förmigen Anker (28) oder Ringanker (27) aufweist.

13. Schwerlastmodulfahrzeug nach einem oder mehreren der Ansprüche 1 bis 12,
**dadurch gekennzeichnet,**
**dass** das Schwerlastmodulfahrzeug (1, 1', 1", 15, 15', 15") eine mit der Lenkung wenigstens eines weiteren Schwerlastmodulfahrzeugs kombinierbare und voll einstellbare Lenkung aufweist.

14. Schwerlastmodulfahrzeug nach einem oder mehreren der Ansprüche 1 bis 13,
**dadurch gekennzeichnet,**
**dass** dieses mit einem weiteren, unterschiedlich breiten und/oder bereiften und/oder hohen Schwerlastmodulfahrzeug (1, 1', 1", 15, 15', 15") kombinierbar ist.

15. Schwerlastmodulfahrzeug nach Anspruch 14,
**dadurch gekennzeichnet,**
**dass** dieses einen Kupplungskopf (9, 9'), insbesondere eine Bolzen-Laschen-Kupplung (9, 9'), aufweist, der mit einem Kupplungskopf (9, 9'), insbesondere einer Bolzen-Laschen-Kupplung (9, 9') eines unterschiedlich breiten, unterschiedlich bereiften und/oder unterschiedlich hohen Moduls ohne Zusatzadapter verbindbar ist.

16. Schwerlastmodulfahrzeug nach Anspruch 15,
**dadurch gekennzeichnet,**
**dass** Druckstücke (26, 26'), Systembleche und/oder Bohrungen (29, 30) denselben an den zu kombinierenden Schwerlastmodulfahrzeugen (1, 1', 1", 15, 15', 15") zumindest teilweise gegenüber stehen und die bei gleich breiten, gleich bereiften und/oder gleich hohen Modulen üblichen Ring- bzw. Zuganker (27, 27'), Zentrier- (31) und Kupplungsbolzen (32) verwendbar sind.

## Claims

1. Modular heavy goods vehicle with at least one axis, one steering system and coupling means, wherein this can be coupled with at least one further modular heavy goods vehicle (1, 1', 1", 15, 15', 15") and/or further transport devices and is optionally telescopic, **characterised in that** the modular heavy goods vehicle (1, 1', 1", 15, 15', 15") has a central longitudinal bearer (3, 14) with at least one open face side (7) and wherein as upper flange of the central longitudinal bearer (3, 14) is formed a load surface as a shell structure.

2. Modular heavy goods vehicle according to claim 1,
**characterised in**
**that** the modular heavy goods vehicle (1, 1', 1", 15, 15', 15") can be telescoped at least once and
**that** the dealer heavy goods vehicle (1, 1', 1", 15, 15', 15") can be telescoped in a plurality of steps.

3. Modular heavy goods vehicle according to claim 1 or 2,
**characterised in**
**that** in the face side open longitudinal bearer (3, 14) is inserted a telescopic bearer (11).

4. Modular heavy goods vehicle according to claim 1 and/or at least one of the preceding claims, **characterised in**
**that** the central longitudinal bearer (3, 14) has a box -shaped upper flange (8) serving as a torsion tube.

5. Modular heavy goods vehicle according to one of claims 1 to 4,
**characterised in**
**that** the modular heavy goods vehicle (1, 1', 1") has a box -shaped longitudinal bearer (3).

6. Modular heavy goods vehicle according to one or more of claims 1 to 5,
**characterised in**
**that** the modular heavy goods vehicle (15, 15', 15") has a U-shaped longitudinal bearer open at the top in the form of a longitudinal trough (14).

7. Modular heavy goods vehicle according to claim 6,
**characterised in**
**that** in the trough (14) is disposed a telescopic bearer (11) which can be telescoped.

8. Modular heavy goods vehicle according to one or more of claims 1 to 7,
**characterised in**
**that** each modular heavy goods vehicle (1, 1', 1", 15, 15', 15") can be slid on a central telescopic bearer (11) and be stopped.

9. Modular heavy goods vehicle according to claim 6 to 8,
**characterised in**
**that** each modular heavy goods vehicle (15, 15', 15") with U-shaped longitudinal bearer (14) open at the top can be placed from below onto the telescopic bearer (11) and removed from it.

10. Modular heavy goods vehicle according to claim 1 and/or at least one of the preceding claims,
**characterised in**
**that** it has on at least one side a coupling head, in particular a pin-strap-coupling (9, 9'), or another suitable coupling means (9, 9'), which is disposed below or externally to the open face side (7, 7') of the longitudinal bearer (3, 14).

11. Modular heavy goods vehicle according to claim 10,
**characterised in**
**that** the longitudinal bearer (3, 14) additionally to the pin-strap-coupling (9, 9') has pressure pieces (26, 26') and/or tension anchors.

12. Modular heavy goods vehicle according to claim 1 and/or 11,
**characterised in**
**that** the face side open longitudinal bearer (3, 14) has at least one U-shaped anchor (28) or ring anchor (27) combined with a coupling head or coupling means (9, 9').

13. Modular heavy goods vehicle according to one or more of claims 1 to 12,
**characterised in**
**that** the modular heavy goods vehicle (1, 1', 1", 15, 15', 15") has a steering system which can be combined with the steering system of at least one further modular heavy goods vehicle and be completely adjusted.

14. Modular heavy goods vehicle according to one or more of claims 1 to 13,
**characterised in**
**that** this can be combined with a further modular heavy goods vehicle (1, 1', 1", 15, 15', 15") which is of different breadth and/or differently tyred and/or of different height.

15. Modular heavy goods vehicle according to claim 14,
**characterised in**
**that** this has a coupling head (9, 9'), in particular a pin-strap-coupling (9, 9') which can be connected with a coupling head (9, 9'), in particular a pin-strap-coupling (9, 9') of a module which is of different breadth and/or differently tyred and/or of different height without an additional adapter.

16. Modular heavy goods vehicle according to claim 15,
**characterised in**
**that** pressure pieces (26, 26'), system sheets and/or holes (29, 30) are situated at least partially opposite the same at the modular heavy goods vehicles (1, 1', 1", 15, 15', 15") which are to be combined, and the ring anchors or tension anchors (27, 27'), centring pins (31) and coupling pins (32) can be used which are normal in the case of equally wide, equally tyred and/or equally high modules.

## Revendications

1. Véhicule modulaire de transport lourd avec au moins un essieu, une direction et des moyens d'attelage,
dans lequel celui-ci peut être attelé avec au moins un autre véhicule modulaire de transport lourd (1, 1', 1", 15, 15', 15") et/ou d'autres dispositifs de transport et est extensible en option, **caractérisé en ce que** le véhicule modulaire de transport lourd (1, 1', 1", 15, 15', 15") présente un longeron (3, 14) central avec au moins un côté avant (7) ouvert et dans lequel une surface de chargement réalisée en tant que construction à coque est réalisée en tant que membrure supérieure du longeron (3, 14) central.

2. Véhicule modulaire de transport lourd selon la revendication 1,
**caractérisé en ce**
**que** le véhicule modulaire de transport lourd (1, 1', 1", 15, 15', 15") est télescopique au moins une fois et
**que** le véhicule modulaire de transport lourd (1, 1', 1", 15, 15', 15") est télescopique en plusieurs étapes.

3. Véhicule modulaire de transport lourd selon la revendication 1 ou 2,
**caractérisé en ce**
**qu'**un support d'extension (11) est guidé dans le longeron (3, 14) ouvert côté avant.

4. Véhicule modulaire de transport lourd selon la revendication 1 et/ou au moins une des revendications précédentes,
**caractérisé en ce**
**que** le longeron (3, 14) central présente une membrure inférieure (8) en forme de caisse servant de tube de torsion.

5. Véhicule modulaire de transport lourd selon l'une quelconque des revendications 1 à 4,
**caractérisé en ce**
**que** le véhicule modulaire de transport lourd (1, 1', 1") présente un longeron (3) en forme de caisse.

6. Véhicule modulaire de transport lourd selon l'une quelconque ou plusieurs des revendications 1 à 5,
**caractérisé en ce**
**que** le véhicule modulaire de transport lourd (15, 15', 15") présente un longeron en forme de U ouvert vers le haut sous la forme d'une cavité longitudinale (14).

7. Véhicule modulaire de transport lourd selon la revendication 6,
**caractérisé en ce**
**qu'**un support d'extension (11) extensible est disposé dans la cavité (14).

8. Véhicule modulaire de transport lourd selon l'une quelconque ou plusieurs des revendications 1 à 7,
**caractérisé en ce**
**que** chaque véhicule modulaire de transport lourd (1, 1', 1", 15, 15', 15") peut être déplacé et arrêté sur un support d'extension (11) central.

9. Véhicule modulaire de transport lourd selon la revendication 6 à 8,
**caractérisé en ce**
**que** chaque véhicule modulaire de transport lourd (15, 15', 15") peut être placé avec un longeron (14) en forme de U ouvert vers le haut depuis le bas sur le support d'extension (11) et retiré de celui-ci.

10. Véhicule modulaire de transport lourd selon la revendication 1 et/ou au moins une des revendications précédentes,
**caractérisé en ce**
**que** celui-ci présente au moins d'un côté une tête d'attelage, en particulier un attelage à boulon et éclisse (9, 9') ou un autre moyen d'attelage (9, 9') approprié qui est disposé en dessous ou en dehors du côté avant (7, 7') ouvert du longeron (3, 14).

11. Véhicule modulaire de transport lourd selon la revendication 10,
**caractérisé en ce**
**que** le longeron (3, 14) présente, outre l'attelage à boulon et éclisse (9, 9'), des pièces de pression (26, 26') et/ou tirants d'ancrage.

12. Véhicule modulaire de transport lourd selon la revendication 1 et/ou 11,
**caractérisé en ce**
**que** le longeron (3, 14) ouvert côté avant présente au moins une ancre (28) ou ancre annulaire (27) en forme de U combinée à une tête d'attelage ou moyen d'attelage (9, 9').

13. Véhicule modulaire de transport lourd selon l'une quelconque ou plusieurs des revendications 1 à 12,
**caractérisé en ce**
**que** le véhicule modulaire de transport lourd (1, 1', 1", 15, 15', 15") présente une direction pleinement réglable et combinable à la direction d'au moins un autre véhicule modulaire de transport lourd.

14. Véhicule modulaire de transport lourd selon l'une quelconque ou plusieurs des revendications 1 à 13,
**caractérisé en ce**
**que** celui-ci est combinable à un autre véhicule modulaire de transport lourd (1, 1', 1", 15, 15', 15") de largeur et/ou pneus et/ou hauteur différents.

15. Véhicule modulaire de transport lourd selon la revendication 14,
**caractérisé en ce**
**que** celui-ci présente une tête d'attelage (9, 9',) en particulier un attelage à boulon et éclisse (9, 9'), qui peut être raccordé à une tête d'attelage (9, 9'), en particulier un attelage à boulon et éclisse (9, 9') d'un module de largeur et/ou pneus et/ou hauteur différents sans adaptateur supplémentaire.

16. Véhicule modulaire de transport lourd selon la revendication 15,
**caractérisé en ce**
**que** des pièces de pression (26, 26'), des tôles de système et/ou des perçages (29, 30) sont au moins partiellement en face les uns des autres au niveau des véhicules modulaires de transport lourd (1, 1', 1", 15, 15', 15") à combiner et les ancres annulaires ou tirants d'ancrage (27, 27'), boulons de centrage (31) et d'attelage (32) courants pour des modules de même largeur, pneus et/ou hauteur peuvent être utilisés.
